# EUROPEAN PATENT SPECIFICATION

(11) **EP 3 004 748 B1**
(45) Date of publication and mention of the grant of the patent: **02.08.2017**
(21) Application number: 14741422.1
(22) Date of filing: 14.05.2014
(51) Int. Cl.: E04B 1/74

(54) **SYSTEM FOR THERMALLY CONDITIONING A ROOM INSIDE A BUILDING**
SYSTEM ZUR THERMISCHEN KONDITION IERUNG EINES RAUMS IN EINEM GEBÄUDE
SYSTÈME DE CONDITIONNEMENT THERMIQUE D'UNE PIÈCE À L'INTÉRIEUR D'UN BÂTIMENT

(30) Priority: 31.05.2013 IT MI20130888
(43) Date of publication of application: 13.04.2016
(73) Proprietor: Studio DBM S.r.l., 20099 Sesto San Giovanni (MI) (IT)
(72) Inventor: Dl GIOVANNI, Gianpaolo, I-20099 Sesto San Giovanni (MI) (IT)
(74) Representative: Guella, Paolo
(86) International application number: PCT/IT2014/000130
(87) International publication number: WO 2014/192033

(56) References cited:
- WO-A1-2007/056798
- WO-A1-2008/055535
- WO-A1-2011/033324
- CN-Y- 201 314 621
- DE-A1-102008 019 888
- KR-A- 20090 120 982

## Description

### Field of application of the invention

The present invention refers to the field of systems adapted for transferring and/or removing heat from the air present in a room (or setting/environment) inside a building, for the purpose of allowing the regulation of the air temperature in said room. By way of example, the following systems belong to this category: the heating systems, the cooling systems (the so-called "air-conditioning systems") and the systems capable of alternately performing both heating and cooling functions (such as the reversible heat pumps).

Hereinbelow in the present description, with the expression "thermal conditioning system" it is intended to identify all the systems belonging to the aforesaid category. More precisely, the present invention refers to a thermal conditioning system that transfers heat via irradiation.

### Review of the prior art

The thermal conditioning of the air present in a room inside a building can be carried out by means of systems of various type.

One of the most widespread systems is that "with radiators", which comprises a circuit in which a work fluid (usually water) circulates at a temperature greater than that of the air in the room to be heated. The circuit mutually connects the tanks which are defined "radiators", since it is at the latter that said fluid transfers heat to the surrounding environment via irradiation, and is thus cooled. The fluid is usually heated in a boiler by means of combustion of fossil fuels and is made to circulate inside the radiators by means of a pump.

With regard to the cooling systems, the most widespread are the air-conditioning systems, which usually comprise a circuit in which a gas circulates at a temperature lower than that of the air in the room to be cooled. The air-conditioning systems also comprise fans (placed at the so-called "internal units" of the system) which draw the air from the room to be cooled and force the passage thereof in proximity to the circuit. The gas removes heat from the air via forced convection, and is thus heated. The gas is usually cooled in a so-called "external unit" by means of a refrigeration cycle and is made to circulate in the internal units by means of a compressor.

In both abovementioned thermal conditioning systems, the transfer of heat between the room to be air-conditioned and the work fluid is localized at the radiators (in heating systems) or at the internal units (in air-conditioning systems). This ensures that the conventional thermal conditioning systems are not very effective since they consume high quantities of energy in relation to the obtained thermal conditioning. The poor efficiency is above all manifested in the buildings whose perimeter walls are poorly insulating from a thermal standpoint.

In order to remedy this drawback, it was sought to increase the insulation of the buildings, as well as to develop thermal conditioning systems more effective than the abovementioned conventional systems.

With regard to the insulation of the buildings, the most widespread solution is the so-called "external insulation", which consists of applying to the building to be insulated an external covering comprising panels made of thermally insulating material. The panels employed however have a very low thermal inertia, and this renders the insulation during the summer poorly effective, when the solar exposure is prolonged and the outside temperature is relatively high.

The most effective thermal conditioning systems include the so/called "radiant panels" heating systems (which can be "floor" and/or "wall" and/or "ceiling" systems), in which the transfer of heat between the room to be heated and the work fluid is distributed on a relatively wide surface. The radiant panel systems comprise a circuit for the circulation of a work fluid, having pipes distributed over the entire surface to be heated, themselves acting as radiators. The circuit of the radiant panel systems is much longer than that of the radiator systems. This translates into a greater thermal exchange surface due to which it is possible to heat the work fluid at a lower temperature than that of the work fluid in the radiator systems.

The obtainment of the radiant panel systems requires, however, a thickening of the wall at which the pipes of the radiant circuit are situated, with a consequent reduction of the volume of the environment that one intends to heat. In addition, the impossibility to make holes on the wall where the pipes of the radiant circuit are situated constitutes a limitation of the freedom in selecting the furnishing of the room to be heated. In addition, the obtainment costs of a radiant panel system are clearly higher than those to be sustained for obtaining a system with radiators. Finally, in the buildings provided with radiator systems, even if it is possible to substitute the existing heating system with a radiant panel system for the purpose of increasing the effectiveness of the thermal conditioning system, this substitution requires a restructuring work that is such to ensure that it is only rarely actuated. Patent document CN-A-201314621 describes one exemplary system according to the preamble of claim 1.

### Objects of the invention

Therefore, the object of the present invention is to remedy the aforesaid drawbacks by indicating a thermal conditioning system more effective than the conventional radiator heating systems and the conventional air-conditioner systems.

### Summary of the invention

Object of the present invention is a system for thermally conditioning the air in a room delimited by at least one wall, said thermal conditioning system comprising a thermal source which exchanges heat with said air,
wherein according to the invention:
said thermal source is placed outside said room;
said thermal conditioning system further comprising:
   - first means for connecting said thermal source to said wall;
   - thermal insulation means placed outside said room and connected to said wall by means of second connection means, said thermal source being placed between said wall and said thermal insulation means;
said thermal source exchanging said heat with said air through said wall.

For clarity purposes, the exchange of heat between the thermal source and the air in the room to be thermally conditioned consists of a "thermal exchange", i.e. of a transfer of heat between the thermal source and said air.

Advantageously, the presence of the thermal insulation means not only constrains the thermal source to exchange heat through the wall where the system is applied, but also increases the insulation itself of the room to be thermally conditioned. In addition, since the exchange of heat does not occur directly between the thermal source and the air in the room to be conditioned but through said wall, the system that is the object of the invention implicitly exploits the heat capacity of said wall. In other words, with reference to the case in which the air of the room to be thermally conditioned is to be heated, once the system that is the object of the invention is turned off, the wall previously heated by the system of the invention continues to transfer heat to the air of the room to be thermally conditioned until the air and the wall are brought to the same temperature. Analogous considerations can be made in the case in which the air of the room to be thermally conditioned is to be cooled. The system, object of the invention, therefore results more effective than the conventional thermal conditioning systems.

Further innovative characteristics of the present invention are described in the dependent claims.

According to one aspect of the invention, said thermal source comprises:
- a tubular element having a first end and a second end;
- suitable means for making a fluid flow inside said tubular element from said first end to said second end;
- suitable means for transferring said heat to said fluid;
said fluid transferring said heat to said room.

According to another aspect of the invention, said thermal source comprises:
- a tubular element having a first end and a second end;
- suitable means for making a fluid flow inside said tubular element from said first end to said second end; said fluid receiving said heat from said room;
- suitable means for removing said heat from said fluid.

According to another aspect of the invention, said thermal source comprises:
- resistor means;
- suitable means for allowing the passage of an electric current through said resistor means;
said passage of current through said resistor means generating said heat by Joule effect.

According to another aspect of the invention, said resistor means comprise carbon fibers.

According to another aspect of the invention, said first connection means comprise at least one plaster layer having a thermal conductivity not less than 1.00 W/(m·K), said plaster layer adhering to said wall and to said thermal source so to be integrally connected thereto.

According to another aspect of the invention, said plaster is cement plaster, i.e. a plaster composed only of concrete or lime and concrete.

According to another aspect of the invention, said first connection means comprise a framework integrally connected to said wall and to said thermal source.

According to another aspect of the invention, said thermal insulation means comprise at least one first layer of material having a thermal conductivity not greater than 0.05 W/(m·K), and at least one second layer of material having a heat capacity not less than 1700.00 J/K, said second layer being interposed between said first layer and said thermal source.

According to another aspect of the invention, said material having a thermal conductivity not greater than 0.05 W/(m·K) is selected from the group comprising expanded polyurethane, sintered expanded polystyrene, extruded expanded polystyrene, cork and vegetable fibers.

According to another aspect of the invention, said material having a heat capacity not less than 1700.00 J/K is selected from the group comprising wood fiber, cellulose, natural cork and high-density viscoelastic polymer membrane. Advantageously, the presence of a layer of material with high heat capacity improves the insulation of the wall to which the system of the invention is applied and contributes to preventing, together with the layer of material with low thermal conductivity, an exchange of heat between the thermal source and the exterior of the room to be conditioned.

### Advantages of the invention

The thermal conditioning system, object of the invention, unites the advantages of the external insulation with those offered by the conventional radiant panel systems, together with the further advantage that it can be installed by means of a single operation rather than requiring two separate operations, respectively for the insulation and the thermal conditioning.

In addition, the system, object of the invention, is not only installable during the construction of the building to which it is applied, but it is also installable on previously-existing buildings through an intervention carried out only on the exterior of the buildings themselves, therefore allowing the continuation of the normal activities within the buildings. In particular, if applied to the perimeter walls of pre-existing condominium buildings, the system that is the object of invention acts as a centralized thermal conditioning system obtainable without operations in the single building units. Possible pre-existing thermal conditioning systems, whether they are of condominium type or present in the single building units, can be maintained as an auxiliary system, without requiring the need to dispose of the same.

With respect to a conventional system with radiant panels, the system that is the object of the invention does not reduce the volume of the room to be thermally conditioned, nor does it limit the freedom in furnishing the spaces of the setting to be conditioned.

### Brief description of the figures

Further objects and advantages of the present invention will be clearer from the following detailed description thereof and from the enclosed drawings, given as merely exemplifying and non-limiting, in which:
- **figure 1** shows, in perspective and partial section view, the thermal conditioning system that is the object of the invention;
- **figure 2** shows the thermal conditioning system of figure 1 in cross section;
- **figures 3A** and **3B** schematically illustrate the operation of the thermal conditioning system of figure 1;
- **figure 4** shows, in perspective and partial section view, an alternative embodiment with respect to that shown in figure 1, of the thermal conditioning system that is the object of the invention;
- **figure 5** shows the thermal conditioning system of figure 3 in cross section;
- **figure 6** schematically illustrates the operation of the thermal conditioning system of figure 4;
- **figure 7** shows, in perspective and partial section view, an alternative embodiment with respect to that shown in figure 1, of the thermal conditioning system that is the object of the invention;
- **figure 8** shows the thermal conditioning system of figure 5 in cross section.

### Detailed description of several preferred embodiments of the invention

In the present description, in order to facilitate the description, reference is only made to a preferred embodiment of the invention, in which the thermal conditioning system is applied to a perimeter wall of a building inside which the room to be thermally conditioned is arranged. It must be clear that the described system is not limited to the aforesaid embodiment but is applicable for thermally conditioning any room delimited by any wall, such as a floor or ceiling or a dividing wall inside a building which separates the room (or setting/environment) to be thermally conditioned from another room inside the building.

In the present description, a figure can be illustrated also with reference to elements not expressly indicated in that figure but in other figures. The scale and proportions of the various depicted elements do not necessarily correspond to the actual scale and proportions.

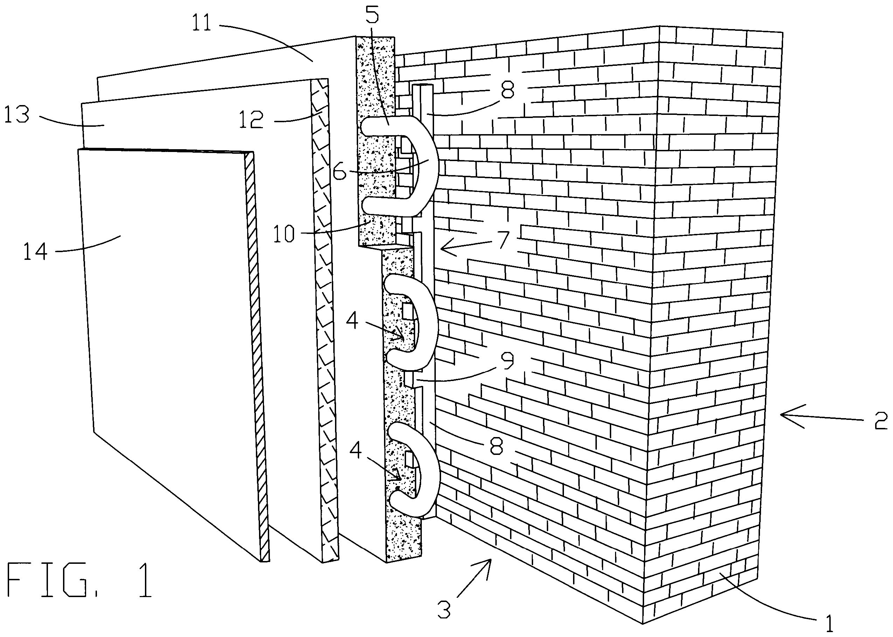

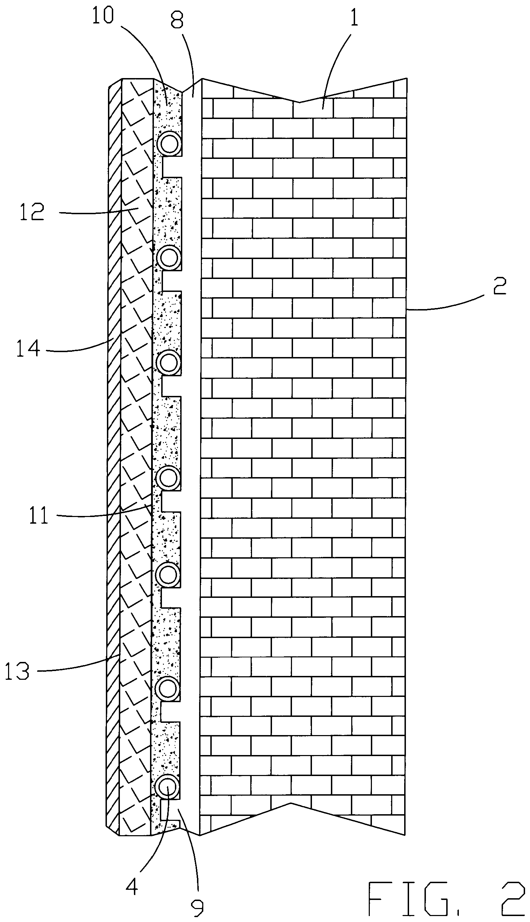

**Figures 1** and **2** show a wall 1 of a building not visible in the figures, which separates a room inside the building from a room/setting outside this. The wall 1 has a first face 2 directed towards said internal room/setting, and a second face 3 opposite the first face 2 and directed towards said external setting. Hereinbelow in the present description: the first face 2 is indicated with the expression "internal face"; the second face 3 is indicated with the expression "external face". By way of example, the wall 1 is a flat vertical wall.

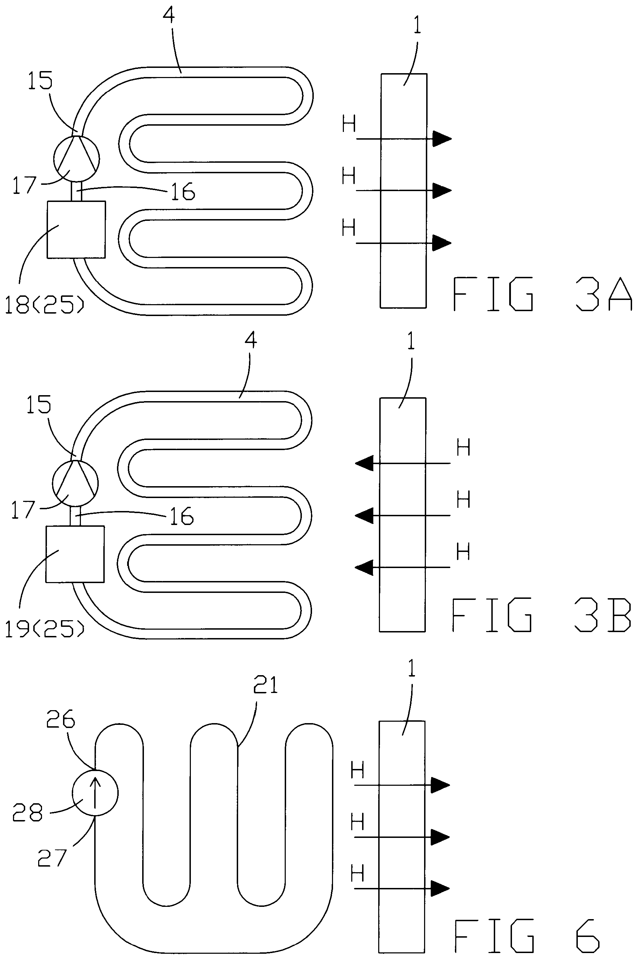

With reference to figures 1 and 2, it is also possible to observe a system for conditioning the air in the room inside the building, comprising a coil 4 integrally connected with the wall 1 at the external face 3. The coil 4 comprises a plurality of pipes 5 preferably arranged parallel to the wall 1 and distributed over the entire surface of the external face 3. By way of example, the pipes 5 are coplanar and in particular preferably lie in a vertical plane, in which they are arranged horizontally and equidistant from each other. The pipes 5 are connected to each other, at the ends, by U-shaped connectors 6 preferably coplanar with the pipes 5, so as to make the coil 4 a circuit having two ends 15 and 16 (visible in figures 3A and 3B). By way of example, the coil is made of polyethylene and has an internal diameter preferably comprised between 10 mm and 20 mm, and still more preferably is 15 mm.

The connection of the coil 4 to the wall 1 is partly obtained by means of supports 7, each of which comprising a bar 8 preferably adherent to the external face 3 and integrally connected to the wall 1. Preferably, the bars 8 are arranged vertically and are mutually equidistant. Each bar 8 comprises a plurality of brackets 9 on which the pipes 5 of the coil 4 are set and to which said pipes 5 are integrally connected. By way of example, the supports 7 are made of polyethylene.

The coil 4 and the supports 7 are immersed in a layer 10 of plaster that adheres to the wall 1 at the external face 3. The plaster has a thermal conductivity preferably not less than 1.00 W/(m·K). By way of example, said plaster is cement plaster and the layer 10 preferably has a thickness comprised between 10 mm and 30 mm, and still more preferably comprised between 15 mm and 20 mm. The plaster layer 10 is covered, at a face 11 situated on the other side of the coil 4 with respect to the wall 1, with a layer 12 of material having a heat capacity preferably not less than 1700.00 J/K. By way of example, this material is wood fiber and the layer 12 has a thickness preferably comprised between 2 mm and 200 mm, and still more preferably is 5 mm. As an alternative or in addition to the wood fiber, the layer 12 can be made of cellulose, natural cork or high-density viscoelastic polymer membrane, or a combination thereof.

The layer 12 of wood fiber is covered, at a face 13 not adhering to the plaster layer 10, with a layer 14 of material having a thermal conductivity preferably not greater than 0.05 W/(m·K). By way of example this material is expanded polyurethane and the layer 14 preferably has a thickness comprised between 20 mm and 200 mm, and still more preferably comprised between 40 mm and 100 mm. As an alternative or in addition to the expanded polyurethane, the layer 14 can be made of sintered expanded polystyrene or expanded polystyrene, cork or vegetable fibers, or a combination thereof.

With reference to **figure 3A****,** it is possible to observe that the coil 4 is connected, at said ends 15 and 16, to a pump 17, by means of which water is made to circulate inside the coil 4.

The coil 4 is also connected to a device 18 capable of transferring heat H to the water that circulates in the coil 4. By way of example, said heating device 18 is a conventional boiler, or a thermal solar panel, or a heat pump that transfers heat to the water in the coil 4.

With regard to the illustration of the operation, for the purpose of transferring heat H to the air of the room inside the building, the heating device 18 transfers heat H to the water in the coil 4 in a manner so as to bring the latter to a temperature greater than that which it is intended to make the air reach (or maintain) in the internal room/setting. The water is made to circulate in the coil 4 by means of the pump 17. Given that the wall 1 lies at a temperature between that of the water in the coil 4 and that of the air in the room inside the building, the water, when it flows in proximity to the wall 1, transfers heat H to the latter via irradiation through the walls of the coil 4 and the plaster layer 10. The wall 1 in turn transfers the heat H received from the water to the air of the room inside the building, heating it. The outermost layers 12 and 14 constitute a thermal insulation that prevents the dispersion of the heat H into the environment outside the building.

The regulation of the temperature of the air in the room inside the building can be carried out by means of means of known type, such as a thermostat which, as a function of the temperature of the air in the room to be heated and the temperature of the water in the coil 4, regulates the transfer of heat H to the water by the heating device 18.

With reference to **figure 3B****,** as an alternative to said heating device 18, the coil 4 is connected to a device 19 capable of removing heat H from the water that circulates in the coil 4. By way of example, said cooling device 19 is a heat pump that removes heat from the water in the coil 4.

With regard to the illustration of the operation, for the purpose of removing heat H from the air of the room inside the building, the cooling device 19 removes heat H from the water in the coil 4 in a manner so as to bring the latter to a temperature below that which it is intended to make the air reach (or maintain) in the internal room. The water is made to circulate in the coil 4 by means of the pump 17. Given that the wall 1 lies at a temperature between that of the water in the coil 4 and that of the air in the room inside the building, the wall 1 transfers heat H via irradiation to the plaster layer 10 and, through the latter, to the water 4. The air of the room inside the building in turn transfers heat H to the wall 1, and is cooled. The outermost layers 12 and 14 constitute a thermal insulation that prevents the water in the coil 4 from absorbing heat from the environment outside the building.

The regulation of the temperature of the air in the room inside the building can be carried out by means of means of known type, such as a thermostat which, as a function of the temperature of the air in the room to be cooled and the temperature of the water in the coil 4, regulates the drawing of heat H from the water by the cooling device 19.

As an alternative to said heating device 18 and said cooling device 19, the coil 4 is connected to a device 25 capable of alternately transferring or removing heat H to/from the water that circulates in the coil 4. By way of example, said device is a reversible heat pump.

With regard to the illustration of the operation, in the latter variant, it is possible to both transfer and remove heat H to/from the room inside the building.

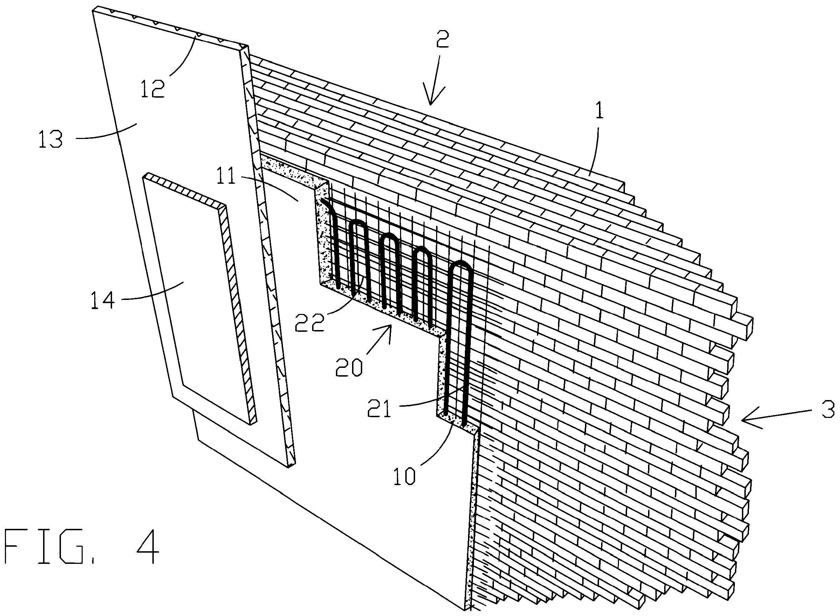

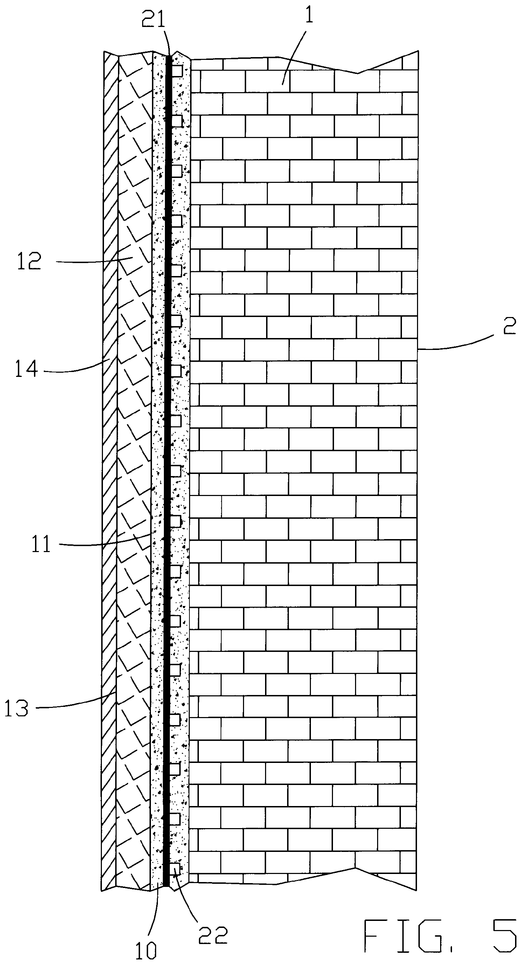

**Figures 4** and **5** show a variant of the thermal conditioning system illustrated in figures 1 and 2, in which, in place of the coil 4, a resistor made of carbon fiber 20 is present, immersed in the plaster layer 10. The resistance element 20 comprises a longitudinal resistor 21 made of carbon fiber integrally connected to a support network 22 (in place of the supports 7). The resistor 21 is extremely long and folded in a manner so as to be distributed over the entire surface of the external face 3 of the wall 1, parallel to the latter. By way of example, the resistor 21 comprises a plurality of coplanar rectilinear sections which preferably lie in a vertical plane (corresponding with that of the support network 22) in which said rectilinear sections are arranged vertically and equidistant from each other. The rectilinear sections are joined to each other by U-shaped curvilinear sections, preferably coplanar with the rectilinear sections, in a manner so as to make the resistor 21 a circuit having two ends 26 and 27 (visible in figure 6).

The connection of the carbon fiber resistance element 20 to the wall 1 is obtained through the support network 22 and the insertion of the same in the plaster layer 10 which, in the current case, preferably has a thickness comprised between 2 mm and 10 mm, and still more preferably is 5 mm.

With reference to **figure 6****,** it is possible to observe that the carbon fiber resistance element 20 is connected, at said ends 26 and 27, to a voltage or electric current generator 28, by means of which electric current is made to circulate inside the resistor 21. By way of example, said generator is a photovoltaic panel.

With regard to the illustration of the operation, for the purpose of transferring heat H to the air in the room inside the building, the generator 28 makes current circulate in the resistor 21 in a manner so as to bring the latter, by Joule effect, to a temperature greater than that which it is intended to make the air reach (or maintain) in the internal room. Given that the wall 1 lies at a temperature between that of the resistance element 20 and that of the air in the room inside the building, the resistance element 20 transfers heat H via irradiation to the wall 1 through the plaster layer 10. The wall 1 in turn transfers the heat H received by the resistor 21 to the air of the room inside the building, heating it. The outermost layers 12 and 14 constitute a thermal insulation which prevents the dispersion of the heat H into the environment outside the building.

The regulation of the temperature of the air in the room inside the building can be carried out by means of known type, such as a thermostat which, as a function of the temperature of the air in the room to be heated and the temperature of the resistor 21, regulates the circulation of electric current set by the generator 28.

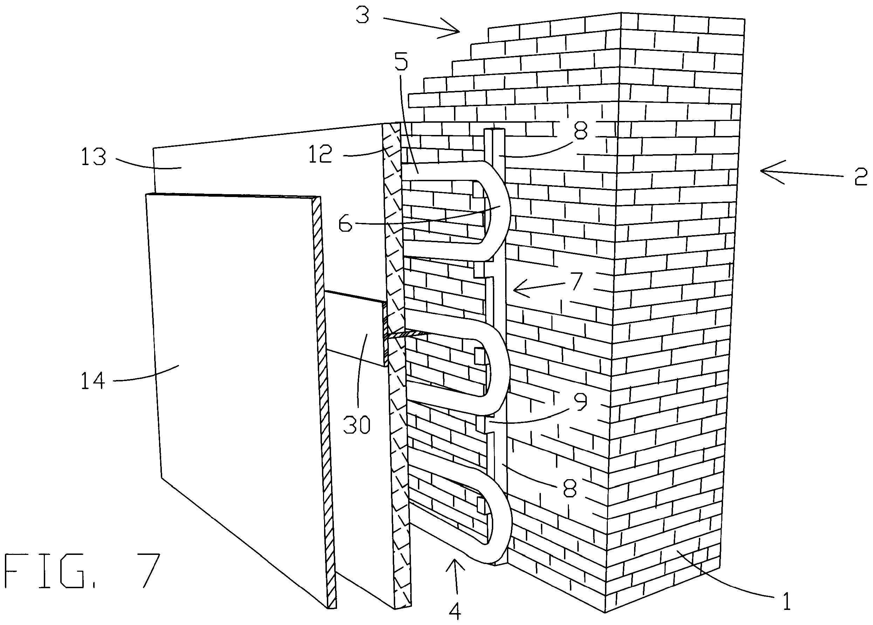

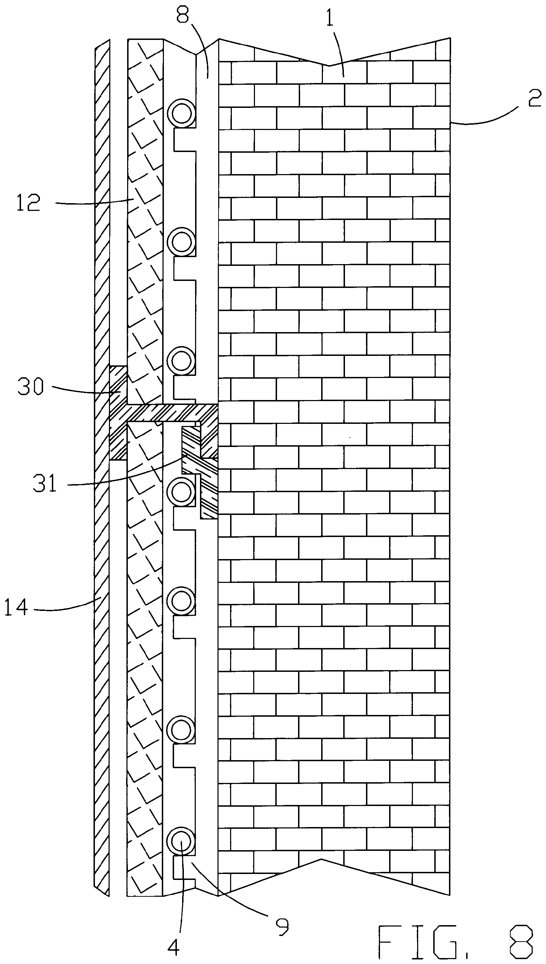

**Figures 7** and **8** show a variant of the thermal conditioning system illustrated in figures 1 and 2, in which the plaster layer 10 is not present. The coil 4 is therefore exclusively connected to the wall 1 by means of the supports 7. The outermost layers 12 and 14 are integrally connected to multiple T-shaped beams 30 in turn connected, preferably via fitting, to respective metal brackets 31 bolted in the wall 1.

On the basis of the description provided for a preferred embodiment, it is clear that some changes can be introduced by the man skilled in the art without departing from the protective scope of the invention as defined by the following claims.

## Claims

1. System for the thermal conditioning of the air present in a room delimited by at least one wall (1), said thermal conditioning system comprising a thermal source (4, 5, 6, 20, 21) which exchanges heat (H) with said air, **characterized in that**:
said thermal source (4, 5, 6, 20, 21) is placed outside said room;
said thermal conditioning system also comprising:
• first means (7, 8, 9, 10, 22) for connecting said thermal source (4, 5, 6, 20, 21) to said wall (1);
• thermal insulation means (12, 14) placed outside said room and connected to said wall (1) by means of second connection means (30, 31);
said system **characterised by** said thermal source (4, 5, 6, 20, 21) being placed between said wall (1) and said thermal insulation means (12, 14);
said thermal source (4, 5, 6, 20, 21) exchanging said heat (H) with said air through said wall (1).

2. Thermal conditioning system according to claim 1, **characterized in that** said thermal source comprises:
• a tubular element (4, 5, 6) having a first end (15) and a second end (16);
• suitable means (17) for making a fluid flow inside said tubular element (4, 5, 6) from said first end (15) to said second end (16);
• suitable means (18, 25) for transferring said heat (H) to said fluid;
said fluid transferring said heat (H) to said room.

3. Thermal conditioning system according to claim 1, **characterized in that** said thermal source comprises:
• a tubular element (4, 5, 6) having a first end (15) and a second end (16);
• suitable means (17) for making a fluid flow inside said tubular element (4, 5, 6) from said first end (15) to said second end (16); said fluid receiving said heat (H) from said room;
• suitable means (19, 25) for removing said heat (H) from said fluid.

4. Thermal conditioning system according to claim 1, **characterized in that** said thermal source comprises:
• resistor means (20, 21);
• means (28) for generating an electric current through said resistor means (20, 21);
said passage of current through said resistor means generating said heat (H) by Joule effect.

5. Thermal conditioning system according to claim 4, **characterized in that** said resistor means comprise carbon fibers.

6. Thermal conditioning system according to claim 1, **characterized in that** said first connection means comprise at least one plaster layer (10) having a thermal conductivity not less than 1.00 W/(m·K), said plaster layer (10) adhering to said wall (1) and to said thermal source (4, 5, 6, 20, 21) so to be integrally connected thereto.

7. Thermal conditioning system according to claim 6, **characterized in that** said plaster is cement plaster.

8. Thermal conditioning system according to claim 1, **characterized in that** said thermal insulation means comprise at least one first layer (14) of material having a thermal conductivity not greater than 0.05 W/(m·K) and at least one second layer (12) of material having a heat capacity not less than 1700.00 J/K, said second layer (12) being interposed between said first layer (14) and said thermal source (4, 5, 6, 20, 21).

9. Thermal conditioning system according to claim 8, **characterized in that** said material having a thermal conductivity not greater than 0.05 W/(m·K) is selected from the group comprising expanded polyurethane, sintered expanded polystyrene, extruded expanded polystyrene and cork.

10. Thermal conditioning system according to claim 8, **characterized in that** said material having a heat capacity not less than 1700.00 J/K is selected from the group comprising wood fiber, cellulose, natural cork and high-density viscoelastic polymer membrane.

## Patentansprüche

1. Thermisches Konditionierungssystem von Luft in einem Raum der aus mindestens einer Wand (1) begrenzt ist, wobei das genannte Konditionierungssystem eine Wärmequelle (4, 5, 6, 20, 21) aufweist, die Wärme (H) mit der genannten Luft austauscht,
**dadurch gekennzeichnet , dass**:
die genannte Wärmequelle (4, 5, 6, 20, 21) außerhalb des genannten Raumes angeordnet ist;
wobei das genannte thermische Konditionierungssystem des Weiteren folgendes umfasst:
* erste Mittel (7, 8, 9, 10, 22) für die Verbindung der genannten Wärme quelle (4, 5, 6, 20, 21) mit der genannten Wand (1);
* thermische Isolationsmittel (12, 14), die außerhalb des genannten Raumes angeordnet ist und mit der genannten Wand (1) durch zweite Verbindungsmittel (30, 31) verbunden ist;
wobei das genannte System **dadurch gekennzeichnet ist, dass** die genannte Wärmequelle (4, 5, 6, 20, 21) zwischen der genannten Wand (1) und die genannten thermischen Isolationsmitteln (12, 14) angeordnet ist;
wobei die genannte Wärmequelle (4, 5, 6, 20, 21) die genannte Wärme (H) mit der genannten Luft durch die genannte Wand (1), austauscht.

2. Thermisches Konditionierungssystem nach Anspruch 1, **dadurch gekennzeichnet, dass** die genannte Wärmequelle folgendes umfasst:
* ein rohrförmiges Element (4, 5, 6) mit einem ersten Ende (15) und einem zweiten Ende (16);
* geeignete Mittel (17) um ein Fluid im Innern des genannten rohrförmigen Elements (4, 5, 6) von dem genannten ersten Ende (15) zu dem genannten zweiten Ende (16) strömen zu lassen;
* geeignete Mittel (18, 25) zum Übertragen der genannten Wärme (H) zum genannten Fluid;
wobei der genannte Raum die genannte Wärme (H) zum genannten Raum überträgt.

3. Thermisches Konditionierungssystem nach Anspruch 1, **dadurch gekennzeichnet, dass** die genannte Wärmequelle folgendes umfasst:
* ein rohrförmiges Element (4, 5, 6) mit einem ersten Ende (15) und einem zweiten Ende (16);
* geeignete Mittel (17) um ein Fluid im Innern des genannten rohrförmigen Elements (4, 5, 6) von dem genannten ersten Ende (15) zu dem genannten zweiten Ende (16) strömen zu lassen; wobei das genannte Fluid die genannte Wärme (H) aus dem genannten Raum empfängt;
* geeignete Mittel (18, 25), um die genannte Wärme (H) aus dem genannten Fluid zu entfernen.

4. Thermisches Konditionierungssystem nach Anspruch 1, **dadurch gekennzeichnet, dass** die genannte Wärmequelle folgendes umfasst:
* widerstandsfähige Mittel (20, 21);
* Mittel (28), um einen elektrischen Strom durch die genannten widerstandsfähige Mittel (20, 21) zu erzeugen;
wobei der genannte Stromfluss durch die genannten widerstandsfähige Mittel die genannte Wärme (H) durch Joule-Effekt erzeugt.

5. Thermisches Konditionierungssystem nach Anspruch 4, **dadurch gekennzeichnet, dass** die genannten widerstandsfähige Mittel aus Kohlenstofffasern gebildet sind.

6. Thermisches Konditionierungssystem nach Anspruch 1, **dadurch gekennzeichnet, dass** die genannten Verbindungmittel mindestens eine Schicht (10) aus Gips umfassen, die eine Wärmeleitfähigkeit von nicht weniger als 1,00 W/(m.K) aufweist, wobei die genannte Schicht (10) aus Gips an die genannte Wand (1) und an die genannte Wärmequelle (4, 5, 6, 20, 21) derart anhaftet, dass sie integral mit dieser verbunden wird.

7. Thermisches Konditionierungssystem nach Anspruch 6, **dadurch gekennzeichnet, dass** der genannte Gips ein Gipszement ist.

8. Thermisches Konditionierungssystem nach Anspruch 1, **dadurch gekennzeichnet, dass** die genannten thermischen Isolationsmittel mindesten eine erste Schicht (14) aufweisen, die aus einem Material besteht, das eine Wärmeleitfähigkeit von nicht mehr als 0,05 W/(m.K) aufweist und mindestens eine zweite Schicht (12) aufweist, das aus einem Material besteht, das eine Wärmeleitfähigkeit von nicht weniger als 1700,00 J/K aufweist, wobei die genannte zweite Schicht (12) zwischen der genannten ersten Schicht (14) und der genannten Wärmequelle (4, 5, 6 , 20, 21) angeordnet ist.

9. Thermisches Konditionierungssystem nach Anspruch 6, **dadurch gekennzeichnet, dass** das genannte Material das eine Wärmeleitfähigkeit von nicht mehr als 0,05 W/(m.K) aufweist, aus der Gruppe ausgewählt ist, die PolyurethanSchaum, gesintertes expandiertes Polystyrol, extrudiertes Polystyrol-Schaum und Kork, umfasst.

10. Thermisches Konditionierungssystem nach Anspruch 8, **dadurch gekennzeichnet, dass** das genannte Material, das eine Wärmekapazität von nicht weniger als 1700,00 J/K aufweist ist, aus der Gruppe ausgewählt wird, die Holzfasern, Cellulose, Naturkork und eine Membran aus viskoelastischem Polymer mit hoher Dichte, umfasst.

## Revendications

1. Système pour le conditionnement thermique de l'air présent dans une chambre délimitée par au moins une paroi (1), ledit système de conditionnement comprenant une source thermique (4, 5, 6, 20, 21), qui échange de la chaleur (H) avec ledit air,
**caractérisé en ce que**:
ladite source thermique (4, 5, 6, 20, 21) est située à l' extérieur de ladite chambre;
ledit système de conditionnement thermique comprend en outre:
* des premiers moyens (7, 8, 9, 10, 22) pour connecter ladite source thermique (4, 5, 6, 20, 21) à ladite paroi (1);
* des moyens d'isolation thermique (12, 14) situés à l' extérieur de ladite chambre et connectés à ladite paroi (1) par l'intermédiaire d'un deuxième moyen de connexion (30, 31);
ledit système étant **caractérisé en ce que**
ladite source thermique (4, 5, 6, 20, 21) est située entre ladite paroi (1) et lesdits moyens d'isolation thermique (12, 14);
ladite source thermique (4, 5, 6, 20, 21) échange ladite chaleur (H) avec ledit air à travers ladite paroi (1).

2. Système de conditionnement thermique selon la revendication 1, **caractérisé en ce que** ladite source thermique comprend:
* un élément tubulaire (4, 5, 6) avec une première extrémité (15) et une deuxième extrémité (16);
* des moyens appropriés (17) pour le passage d'un débit fluide à l'intérieur dudit élément tubulaires (4, 5, 6) à partir de ladite première extrémité (15) à ladite deuxième extrémité (16);
* des moyens appropriés (18, 25) pour transférer ladite chaleur (H) audit fluide;
ledit fluide transfert de ladite chaleur (H) à ladite chambre.

3. Système de conditionnement thermique selon la revendication 1, **caractérisé en ce que** ladite source thermique comprend:
* un élément tubulaire (4, 5, 6) avec une première extrémité (15) et une deuxième extrémité (16);
* des moyens appropriés (17) pour le passage d'un débit fluide à l'intérieur dudit élément tubulaire (4, 5, 6) à partir de ladite première extrémité (15) à ladite deuxième extrémité (16); ledit fluide recevant ladite chaleur (H) à partir de ladite chambre;
* des moyens appropriés (18, 25) pour éliminer ladite chaleur (H) dudit fluide.

4. Système de conditionnement thermique selon la revendication 1, **caractérisé en ce que** ladite source de thermique comprend:
* des moyens résistants (20, 21);
* des moyens (28) pour générer un courant électrique à travers ledit moyen résistant (20, 21);
ledit passage de courant à travers ledit moyen résistant génère ladite chaleur (H) par effet Joule.

5. Système de conditionnement thermique selon la revendication 4, **caractérisé en ce que** lesdits moyens résistants sont formés à partir de fibres de carbone.

6. Système de conditionnement thermique selon la revendication 1, **caractérisé en ce que** lesdits premiers moyens de connexion comprennent une couche de plâtre (10 ayant une conductivité thermique non inférieure à 1,00 W/(m.K), ladite couche de plâtre (10) adhérant à ladite paroi (1) et à ladite source thermique (4, 5, 6, 20, 21) de manière à être reliée de façon intégrée à celle-ci.

7. Système de conditionnement thermique selon la revendication 6, **caractérisé en ce que** ledit plâtre est un plâtre de ciment.

8. Système de conditionnement thermique selon la revendication 1, **caractérisé en ce que** lesdits moyens d'isolation thermique comprennent au moins une première couche (14) d'un matériau ayant une conductivité thermique non supérieure à 0,05 W/(m.K) et au moins une deuxième couche (12) d'un matériau avec une capacité thermique non inférieure à 1700,00 J/K, ladite deuxième couche (12) étant interposée entre ladite première couche (14) et ladite source thermique (4, 5, 6, 20, 21).

9. Système de conditionnement thermique selon la revendication 8, **caractérisé en ce que** ledit matériau ayant une conductivité thermique non supérieur à 0,05 W/(m.K) est choisi dans le groupe comprenant de la mousse de polyuréthanne, du polystyrène expansé fritté, de la mousse de polystyrène extrudé et du liège.

10. Système de conditionnement thermique selon la revendication 8, **caractérisé en ce que** ledit matériau ayant une capacité thermique non inférieure à 1700,00 J/K est choisi dans le groupe comprenant des fibres de bois, de la cellulose, du liège naturel et d'une membrane viscoélastique d'un polymère de haute densité.
